# EUROPÄISCHE PATENTSCHRIFT

(11) **EP 3 078 242 B1**
(45) Veröffentlichungstag und Bekanntmachung des Hinweises auf die Patenterteilung: **20.01.2021**
(21) Anmeldenummer: 14802901.0
(22) Anmeldetag: 27.11.2014
(51) Int. Cl.: H05B 45/37, H05B 45/10, H05B 45/50, H05B 45/30

(54) **TREIBERSCHALTUNG FÜR LEUCHTMITTEL INSBESONDERE LEDS**
DRIVING CIRCUIT FOR LIGHTING MEANS IN ESPECIALLY LEDS
CIRCUIT D'EXCITATION POUR MOYEN D'ÉCLAIRAGE, EN PARTICULIER DES DIODES ÉLECTROLUMINESCENTES

(30) Priorität: 03.12.2013 DE 102013224749
(43) Veröffentlichungstag der Anmeldung: 12.10.2016
(73) Patentinhaber: Tridonic GmbH & Co. KG, 6851 Dornbirn (AT)
(72) Erfinder: DÜNSER, Mathias, A-6700 Bludenz (AT)
(74) Vertreter: Rupp, Christian
(86) Internationale Anmeldenummer: PCT/EP2014/075734
(87) Internationale Veröffentlichungsnummer: WO 2015/082288

(56) Entgegenhaltungen:
- WO-A1-2008/151800
- WO-A1-2010/124311
- WO-A1-2013/092662
- US-A1- 2009 219 007
- US-A1- 2009 316 454
- US-A1- 2010 283 398
- US-A1- 2011 080 102
- US-A1- 2012 293 072
- US-A1- 2013 127 348
- US-A1- 2013 250 627
- ANONYMOUS: "AN-9729. LED Application Design Guide Using Half-Bridge LLC Resonant Converter for 100W Street Lighting", INTERNET CITATION, 16 November 2012 (2012-11-16), pages 1-14, XP002707759, Retrieved from the Internet: URL:http://www.fairchildsemi.com/an/AN/AN- 9729.pdf [retrieved on 1077]

## Beschreibung

Die vorliegende Erfindung betrifft einen Konverter für den Betrieb wenigstens eines Leuchtmittels, insbesondere eine Treiberschaltung für den Betrieb wenigstens einer LED.

Die Druckschrift US 2012/0293072 A1 offenbart eine frequenzvariable Dimmsteuervorrichtung für LEDs sowie ein Verfahren zum Betrieb einer solchen Vorrichtung. Die Druckschrift WO 2010/124311 A1 offenbart eine Treiberschaltung für eine LED. Das Dokument *"AN-9729. LED Application Design Guide Using Half-Bridge LLC Resonant Converter for 100W Street Lighting"* offenbart ein LED-System mit einem Halbbrücken-LLC-Resonanzkonverter.

Treiberschaltungen zum Betreiben von LEDs sind aus dem Stand der Technik grundsätzlich bekannt. Eine solche Treiberschaltung wird von einer elektrischen Versorgungsquelle versorgt, und umfasst einen Resonanzkreis, wie z.B. einen LLC-Konverter, der dafür zuständig ist, Strom über eine galvanische Sperre bzw. galvanische Barriere von einer Primärseite auf eine Sekundärseite der galvanischen Sperre zu übertragen. Zweck dieser Übertragung von elektrischer Energie ist die Versorgung einer auf der Sekundärseite geschalteten LED-Strecke mit Strom.

Bekannterweise wird ein solcher Resonanzkreis bzw. eine solche Treiberschaltung als Konstantstrom-Konverter betrieben. Hierzu kann ein Regelkreis zur Regelung des LED-Stroms vorgesehen sein, wobei ein Istwert des LED-Stroms auf der Sekundärseite der galvanischen Sperre gemessen werden kann.

Diese Istwert-Messung muss allerdings an einen primärseitigen Steuerkreis bzw. an eine primärseitige Steuerschaltung zurückgeführt werden, um die Treiberschaltung entsprechend zu steuern.

Nachteilig bei dieser Ausgestaltung ist die Tatsache, dass die Rückführung des Istwerts des LED-Stroms zurück zur primärseitigen Steuerschaltung eine Potentialtrennung und somit einen Optokoppler erfordert.

Daher wurde im Stand der Technik bereits versucht, auf eine sekundärseitige Erfassung des LED-Stroms zu verzichten und den Wert des Stroms indirekt über den Strom auf der Primärseite des Transformators zu erfassen. Ausgehend von diesem Rückführwert wird eine Stromregelung durchgeführt, in dem ein entsprechender Schalter einer Halbbrückenschaltung der Treiberschaltung verändert wird.

Auch solche Ausgestaltungen sind indessen nicht zufriedenstellend. Diese Erfassung auf der Primärseite hat nämlich den Nachteil, dass sie nicht direkt den LED-Strom wiedergibt, sondern vielmehr den variablen Anteil des Magnetisierungsstroms auf der Primärseite mit umfasst. Dieser Anteil ist variabel und hängt insbesondere von der LED-Spannung ab, welche wiederum z.B. von der Anzahl der LEDs abhängig ist. Eine feste Kompensation des Magnetisierungsstroms kann somit nicht erfolgen. Vielmehr ist zur Kompensation eine direkte Messung der LED-Spannung notwendig, was allerdings wiederum einen AD-Wandler und eine Rückführung über einen Optokoppler zu der Steuerschaltung auf der Primärseite erfordert.

Der Erfindung liegt das technische Problem zugrunde, eine Schaltung bzw. einen LED-Konverter zum Betreiben einer LED-Strecke und ein entsprechendes Betriebsverfahren anzugeben, bei denen die primärseitige Regelung verbessert werden kann und insbesondere die oben genannten Nachteile beseitigt werden können.

Dieses der Erfindung zugrunde liegende Problem wird nunmehr durch die Kombination der Merkmale der unabhängigen Ansprüche gelöst. Die abhängigen Ansprüche bilden den zentralen Gedanken der Erfindung vorteilhaft weiter.

Grundgedanke der Erfindung ist es, eine sekundärseitige transformatorische Erfassung des LED-Stroms indirekt dadurch zu veranlassen, dass eine transformatorische Auskopplung in dem Bereich der Sekundärseite insbesondere zwischen der Sekundärseite des Transformators und der Gleichrichtung erfolgt.

Zusammenfassend bezieht sich die Erfindung auf eine Treiberschaltung bzw. auf einen LED-Treiber, bei dem z.B. ein sogenannter LLC-Resonanzkreis verwendet wird. Dabei speist eine Halbbrückenschaltung einen Resonanzkreis, der über eine galvanische Trennung in Form z.B. eines Transformators und eine Gleichrichterschaltung die LED-Strecke speist. Gemäß der Erfindung ist auf der Sekundärseite des Transformators kein Buck-Konverter (DC/DC-Wandler), oder anderen getakteten Wandlern vorgesehen.

Es sind unterschiedliche Schaltungs-Topologien vorgesehen, da es erfindungsgemäß unterschiedliche Möglichkeiten gibt, die Sekundärwicklung des Transformators anzuzapfen und diese Spannung gleichgerichtet der LED-Strecke zuzuführen.

Ziel ist es bei den erfindungsgemäßen Ausgestaltungen allgemein, möglichst wenig Rückführungen von der Sekundärseite potentialgetrennt zu der Steuerschaltung auf der Primärseite zu haben und dabei auf kostenträchtige Optokoppler zu verzichten.

Die erfindungsgemäße transformatorische Auskopplung und die konkrete Auswertung dieses transformatorischen AC-Signals können in unterschiedlicher Weise erfolgen. Erfindungsgemäß ist es von Bedeutung, dass auf der Sekundärseite des Transformators ein Signal transformatorisch ausgekoppelt wird und ggf. verarbeitet, der primärseitigen Steuerschaltung zugeführt wird, die wiederum die Leistungsschalter der Halbbrücke taktet. Somit ist die Regelschleife geschlossen.

Nachfolgend wird die Erfindung außerdem in Hinblick auf die Figuren beschrieben.
Fig. 1 zeigt schematisch den Aufbau einer erfindungsgemäßen Treiberschaltung zur Versorgung einer LED-Strecke,
Fig. 2 zeigt ein weiteres erfindungsgemäßes Ausführungsbeispiel einer Treiberschaltung zur Versorgung einer LED-Strecke,
Fig. 3 zeigt ein erstes Ausführungsbeispiel einer Auswerteschaltung für die Zurückführung eines Ist-Signals,
Fig. 4 zeigt ein weiteres Ausführungsbeispiel für eine erfindungsgemäße Auswerteschaltung, und
Fig. 5 zeigt ein weiteres erfindungsgemäßes Ausführungsbeispiel einer Auswerteschaltung für die Zurückführung des Ist-Signals.

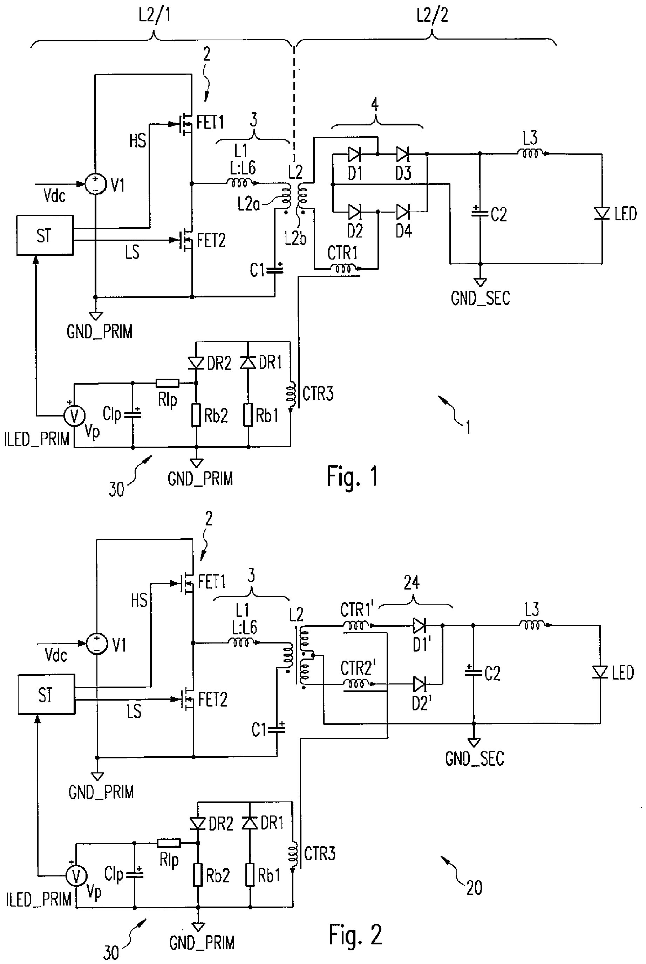

Fig. 1 zeigt ein Ausführungsbeispiel einer Treiberschaltung 1 zur Versorgung von Leuchtmitteln, insbesondere in Form eines eines LED-Konverters zur Versorgung von LEDs bzw. einer LED-Strecke.

Die Treiberschaltung 1 wird von einer Eingangsspannung Vdc gespeist. Die Eingangsspannung Vdc ist vorzugsweise eine gleichgerichtete, und gegebenenfalls gefilterte, Wechselspannung bzw. Netzspannung. Vorzugsweise wird diese gleichgerichtete Netzspannung noch einem Wandler in Form z.B. einer Leistungsfaktorkorrektur-Schaltung (nicht gezeigt) zugeführt, bevor sie die Treiberschaltung 1 versorgt. Die Eingangsspannung Vdc ist in diesem Fall eine näherungsweise konstante Busspannung gegebenenfalls aufweisend eine Restwelligkeit. Alternativ kann die Eingangsspannung Vdc auch eine Gleichspannung bzw. eine konstante Spannung wie z.B. eine Batteriespannung.

Eingangsseitig ist in der Treiberschaltung 1 ein Schaltregler vorgesehen, der von der Eingangsspannung Vdc gespeist wird. Die Eingangsspannung Vdc versorgt insbesondere eine getaktete Schaltung bzw. einen Wechselrichter, der z.B. in Form einer Halbbrückenschaltung 2 ausgestaltet sein kann. Die gezeigte Halbbrückenschaltung 2 weist einen potentialniedrigeren Schalter FET2 und einen potentialhöheren Schalter FET1 auf. Erfindungsgemäß weist der Wechselrichter 2 zumindest einen Schalter auf. Als Wechselrichter mit einem Schalter kann z.B. ein Flyback-Konverter (nicht gezeigt) vorgesehen sein.

Die beiden Schalter FET1, FET2 der Halbbrückenschaltung 2 können als Transistoren, z.B. FET oder MOSFET, ausgestaltet sein. Die Schalter FET1, FET2 werden von jeweiligen Steuersignalen HS, LS ausgehend von einer Steuerschaltung ST gesteuert. Der potentialniedrigere Schalter FET2 ist mit einer primärseitigen Masse GND_PRIM verbunden. An der Halbbrückenschaltung 2 liegt die Eingangsspannung Vdc an.

Am Mittelpunkt der Halbbrückenschaltung 2, d.h. zwischen beiden Schaltern FET1, FET2, ist ein Resonanzkreis 3 in Form z.B. eines Serienresonanzkreis angeschlossen. Alternativ kann erfindungsgemäß auch ein Parallelresonanzkreis am Mittelpunkt der Halbbrückenschaltung 2 angeschlossen sein. Der in Fig. 1 gezeigte Resonanzkreis 3 ist als Serienresonanzkreis ausgestaltet und umfasst Induktanz- und Kapazitätselemente. Insbesondere ist zwischen primärseitiger Masse GND_PRIM und dem Mittelpunkt der Halbbrückenschaltung 2 eine Serienschaltung aufweisend eine erste Spule L1, eine zweite Spule L2a und einen Kondensator C1. Der Resonanzkreis 3 wird in diesem Fall als LLC-Resonanzkreis bezeichnet. Der Kondensator C1 und die Spule L1 bilden vorzugsweise einen LC-Resonanzkreis.

Die zweite Spule L2a ist vorzugsweise die Primärwicklung eines Transformators L2, der als Überträger zur galvanischen Trennung dient. Der Transformator L2 ist ein Beispiel einer galvanischen Sperre. In Fig. 1 ist der Transformator L2 als idealer Transformator dargestellt, wobei die Primärwicklung des realen Transformators L2 eine Streuinduktivität und eine Hauptinduktivität zum Führen des Magnetisierungsstroms aufweisen kann.

Der Transformator L2 bildet insgesamt eine galvanische Sperre 5 zwischen einer Primärseite L2/1 aufweisend die Primärwicklung L2a und einer Sekundärseite L2/2 aufweisend die Sekundärwicklung L2b des Transformators L2.

Diese Sekundärwicklung L2b des Transformators L2 wird einem Gleichrichter 4 zugeführt, der im Ausführungsbeispiel der Fig. 1 als Brückengleichrichter bzw. Vollbrückengleichrichter mit vier geschalteten Dioden D1, D2, D3, D4 gebildet ist. Diese Ausführung mit den vier Dioden D1, D2, D3, D4 ist beispielhaft für ein passiver Gleichrichter. Alternativ kann der Gleichrichter als aktiver Gleichrichter ausgestaltet sein, insbesondere mit Schaltern, z.B. in Form von MOSFETs.

Der Vollbrückengleichrichter Brückengleichrichter speist ausgangsseitig ausgehend von einer sekundärseitigen Masse GND_SEC einen Speicherkondensator C2. Als Speicherkondensator C2 kann aufgrund seiner vergleichsweise hohen Kapazität vorzugsweise ein Elektrolytkondensator eingesetzt werden.

Parallel zum Speicherkondensator C2 sind die Leuchtmittel, vorzugsweise LEDs bzw. eine LED-Strecke, geschaltet. In Fig. 1 soll die dargestellte LED für eine oder mehrere LEDs repräsentativ sein. Vorzugsweise kann die von der Treiberschaltung 1 betriebene LED-Strecke eine Reihenschaltung von mehreren LEDs aufweisen. Alternativ können auch parallel angeordnete LEDs oder eine Kombination aus parallel und in Serie geschalteten LEDs versorgt werden.

Am Ausgang der Gleichrichterschaltung 4 bzw. des Speicherkondensators C2 können weitere Bauteile zur Filterung vorgesehen sein. Beispielhaft ist hierzu in Fig. 1 eine Spule L3 gezeigt. Diese Spule L3 ist in Serie zu den LEDs angeordnet, wobei diese Serienschaltung parallel zum Kondensator C2 geschaltet ist.

Durch die Sekundärwicklung L2b des Transistors L2 fließt im Betrieb vorzugsweise ein AC-Strom d.h. ein Wechselstrom. Erfindungsgemäß wird nunmehr vorgeschlagen, diesen Wechselstrom über eine auf der Sekundärseite L2/2 vorgesehene Erfassungs-Wicklung CTR1 in einen primärseitigen Strom zu transformieren. Diese Erfassungs-Wicklung CTR1 ist hierzu mit einer primärseitigen Erfassungs-Wicklung CTR3 gekoppelt.

Die sekundärseitige Erfassungs-Wicklung CTR1 ist in Serie zur Sekundärwicklung L2b des Transformators L2 angeordnet. Vorzugsweise ist die Erfassungs-Wicklung CTR1 zwischen der Sekundärwicklung L2b und der Gleichrichterschaltung 4, d.h. zwischen einer Klemme der Sekundärwicklung L2b und einer Eingangsklemme der Gleichrichterschaltung 4, geschaltet.

Gemäß einer bevorzugten Ausführungsform sind die Sekundärwicklung L2b und die Erfassungs-Wicklung CTR1 als separate Wicklungen ausgebildet. D.h. die Sekundärwicklung L2b und die Erfassungs-Wicklung CTR1 bilden zwei separate Transformatoren. Dies ergibt sich insbesondere aus der Anforderung, dass der Erfassungs-Transformator CTR1, CTR3 als Stromtransformator ausgebildet ist. Die Wicklungen des Erfassungs-Transformators CTR1, CTR3 sind insbesondere dazu ausgebildet, eine möglichst verlustfreie Erfassung des sekundärseitigen Wechselstroms zu ermöglichen. Durch geeignete Wahl der Wicklungen kann der als Stromtransformator ausgebildete Erfassungs-Transformator CTR1, CTR3 eine möglichst geringe Impedanz aufweisen.

Der Strom durch die Erfassungs-Wicklung CTR1 gibt den Strom durch die LEDs wieder. Wenn der optionale Speicherkondensator C2 nicht in der Treiberschaltung 1 vorgesehen ist, fließt der Strom durch die Erfassungs-Wicklung CTR1 in der Tat auch durch die LEDs. Wenn der zur Filterung dienende Kondensator C2 angeschlossen ist, wird die elektrische Energie, die er zwischenzeitlich speichert, wieder an die Last d.h. an die LEDs weitergegeben. Ob mit oder ohne Speicherkondensator C2, der Mittelwert des LED-Stroms bleibt gleich, und die Erfassungs-Wicklung CTR1 gibt den LED-Strom wieder.

Der Wechselstrom durch die Erfassungs-Wicklung CTR1 erzeugt entsprechend einen Wechselstrom in der primärseitigen Erfassungs-Wicklung CTR3. Eine Auswerteschaltung 30 ist an der primärseitigen Erfassungs-Wicklung CTR3 angeschlossen, um einen Messwert ILED_PRIM für den Strom durch die LEDs zu erzeugen. Dieser Messwert ILED_PRIM wird der Steuerschaltung ST zurückgeführt. Auf der Grundlage des erhaltenen Rückführwerts erzeugt die Steuerschaltung ST die Steuersignale HS, LS für die Schalter FET1, FET2, wobei diese Schalter alternierend ein- und ausgeschaltet werden. Ausgehend von dem Ist-Wert ILED_PRIM führt die Steuerschaltung ST eine Stromregelung auf einen gewünschten Soll-Wert durch, in dem die Halbbrückenschaltung 2 entsprechend getaktet wird.

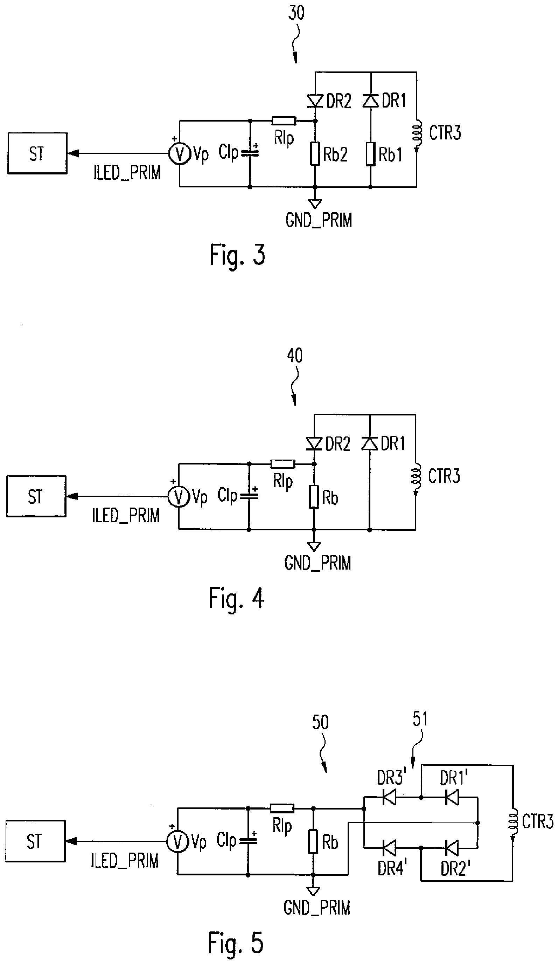

Die im Ausführungsbeispiel der Fig. 1 eingesetzte Auswerteschaltung 30 wird nachfolgend im Zusammenhang mit Fig. 3 näher erläutert.

Fig. 2 zeigt ein weiteres Ausführungsbeispiel für eine Treiberschaltung 20 für Leuchtmittel wie z.B. LEDs.

Die Treiberschaltung 20 entspricht grundsätzlich der in Fig. 1 gezeigte Treiberschaltung 1, und umfasst entsprechend die Halbbrückenschaltung 2 und den Resonanzkreis 3. Von dem Ausführungsbeispiel der Fig. 1 unterscheidet sich die Treiberschaltung 20 indessen durch die Ausgestaltung des Transformators und der Gleichrichterschaltung 24.

Die Sekundärwicklung L2b des Transformators L2 weist eine Anzapfung bzw. Abzapfung, insbesondere eine Mittelanzapfung bzw. Mittelpunktanzapfung. Diese Mittelanzapfung bildet einen Potential der Ausgangsspannung der Gleichrichterschaltung 24, nämlich die sekundärseitige Masse GND_SEC.

Eine Klemme der Sekundärwicklung L2b ist mit der Anode einer ersten Diode D1' verbunden, und die andere Klemme der Sekundärwicklung L2b mit der Anode einer zweiten Diode D2'. Die jeweiligen Kathoden der Dioden D1', D2' sind zusammengeführt und bilden das andere Ausgangspotential der Gleichrichterschaltung 24, das vorzugsweise mit dem Speicherkondensator C2 verbunden ist. Dieser Gleichrichter 24 kann als Mittelpunktgleichrichter bezeichnet werden.

Im Unterschied zum Ausführungsbeispiel der Fig. 1 sind nunmehr zwei sekundärseitige Erfassungs-Wicklungen CTR1', CTR2' notwendig, um eine korrekte Erfassung des Wechselstroms auf der Sekundärseite L2/2 zu gewährleisten. Je nach Richtung des Wechselstroms wird ein Strom durch die erste oder durch die zweite Diode D1', D2' fließen. Zur kompletten Erfassung des Stroms durch die LEDs ist somit die erste Erfassungs-Wicklung CTR1' in Serie mit der ersten Diode D1' geschaltet, und die zweite Erfassungs-Wicklung CTR2' in Serie mit der zweiten Diode D2'.

Wie in Fig. 2 dargestellt, sind die zwei sekundärseitigen Erfassungs-Wicklungen CTR1', CTR2' mit der primärseitigen Erfassungs-Wicklung CTR3 gekoppelt. Unabhängig von der Ausgestaltung der Treiberschaltung gemäß dem Ausführungsbeispiel der Fig. 1 oder der Fig. 2 ergibt sich insgesamt an der primärseitigen Erfassungs-Wicklung CTR3 denselben Strom.

Ähnlich wie in Fig. 1 ist der durch die Wicklungen CTR1', CTR2', CTR3 gebildete Erfassungs-Transformator als Stromtransformator ausgestaltet. Vorzugsweise sind auch die Erfassungs-Wicklungen CTR1', CTR2' separat zum Transformator L2 ausgebildet.

Gegenüber dem Ausführungsbeispiel der Fig. 2 sind bei der Ausgestaltung nach Fig. 1 mehr Dioden notwendig - die vier Dioden D1, D2, D3, D4 gegenüber zwei Dioden D1', D2' -. Dafür umfasst die Treiberschaltung 1 eine einzige sekundärseitige Erfassungs-Wicklung CTR1, im Vergleich zu den zwei Wicklungen CTR1', CTR2' der Treiberschaltung 20 mit Mittelanzapfung.

Fig. 3 zeigt eine Ausführungsform der Auswerteschaltung 30, wie sie in den Treiberschaltungen 1, 20 der Figs. 1, 2 vorkommt.

Die Auswerteschaltung 30 dient prinzipiell dazu, die von der Erfassungs-Wicklung CTR3 gelieferte Information über den Strom durch die LEDs auszuwerten bzw. zu verarbeiten und anschließend zu der Steuerschaltung ST rückzuführen. Um den Wert des Stroms durch die Sekundärseite L2/2 zu ermitteln, soll die Steuerschaltung ST dabei insbesondere das Verhältnis der Windungszahlen der Wicklungen CTR1, CTR3 oder CTR1', CTR2', CTR3 berücksichtigen, wobei im Ausführungsbeispiel der Fig. 2 die Windungszahlen der sekundärseitigen Erfassungs-Wicklungen CTR1', CTR2' vorzugsweise gleich sind.

Parallel zur Erfassungs-Wicklung CTR3 sind zwei Reihenschaltungen bestehend jeweils aus einer Diode DR1, DR2 und einem Widerstand bzw. Messwiderstand Rb1, Rb2 geschaltet. Die Widerstände Rb1, Rb2 sind jeweils an der primärseitigen Masse GND_PRIM angeschlossen. Eine Diode DR2 ist mit ihrer Anode zu einer Klemme der Erfassungs-Wicklung CTR3 angeschlossen, die andere Diode DR1 ist mit ihrer Kathode zu dieser Klemme angeschlossen. Die Dioden DR1, DR2 bzw. die entsprechenden Reihenschaltungen sind antiparallel geschaltet.

Die Auswerteschaltung 30 ist so ausgestaltet, dass nur eine Halbwelle des von der Erfassungs-Wicklung CTR3 erfassten Stroms ausgewertet wird und der Steuerschaltung ST zurückgeführt wird.

Vorzugsweise wird über die Spannung an einem der Widerstände Rb1, Rb2 der Strom durch die LEDs ausgewertet.

In der Ausführungsform der Fig. 3 wird die Spannung am Widerstand Rb2 berücksichtigt. Alternativ könnte auch die Spannung am anderen Widerstand Rb1 in Betracht gezogen werden.

Wie in Fig. 3 gezeigt, ist die den LED-Strom wiedergebende Spannung einem RC-Glied zugeführt. Das RC-Glied besteht aus einem Widerstand Rlp und einem Kondensator Clp und dient zur Tiefpass-Filterung der gemessenen Spannung am Widerstand Rb2. Somit wird der Steuerschaltung ST einem Mittelwert des Stroms durch die LEDs zurückgeführt. Dieses RC-Glied ist optional, so dass auch die Spannung am Widerstand Rb2 als Rückführwert ILED_PRIM genommen werden kann.

Fig. 4 zeigt eine weitere Ausführungsform der Auswerteschaltung 40. Diese Auswerteschaltung 40 kann z.B. in den Figs. 1 und 2 die Auswerteschaltung 30 ersetzen.

Einziger Unterschied zur Ausführungsform gemäß Fig. 3 ist hier das Weglassen des Widerstands Rb1, dessen Spannung in Fig. 3 nicht gemessen wird.

Die Funktionsweise der Auswerteschaltung 40 ist somit ähnlich, in dem nur eine Halbwelle des durch die Erfassungs-Wicklung CTR3 erfassten Stroms ausgewertet wird und der Steuerschaltung ST als Ist-Signal ILED_PRIM weitergeleitet wird.

Bei der Auswerteschaltung 40 wird also ein Bauelement - der Widerstand RB1 - eingespart. Allerdings ist diese Ausführungsform gegenüber Fig. 3 auch nachteilig, in dem beide Halbwellen nicht symmetrisch belastet werden.

In Fig. 3 sind indessen durch die Widerstände Rb1, Rb2 beide Halbwellen vorteilhafterweise symmetrisch belastet, insbesondere wenn beide Widerstände Rb1, Rb2 denselben elektrischen Widerstand aufweisen. Die hierdurch erreichte symmetrische Belastung des Stroms durch die Sekundärseite und somit durch den Resonanzkreis 3 ist vorteilhaft für den guten Betrieb der Treiberschaltung.

Fig. 5 zeigt noch eine weitere Ausführungsform der Auswerteschaltung 50, die ebenfalls bei einer Treiberschaltung 1, 20 gemäß Figs. 1 oder 2 einsetztbar ist.

Im Gegensatz zu den Figs. 3 und 4 werden hier beide Halbwellen ausgewertet. Entsprechend ist die Erfassungs-Wicklung CTR3 mit einem Vollbrückengleichrichter 51, der vorzugsweise aus vier Dioden DR1', DR2', DR3', DR4' besteht, verschaltet. Somit werden vom Gleichrichter 51 sowohl die positiven als auch die negativen Halbwellen des Wechselstroms durch die Wicklung CTR3 weitergegeben bzw. gleichgerichtet.

Am Ausgang des Vollbrückengleichrichters 51 ist wiederum ein Widerstand bzw. Messwiderstand Rb geschaltet, der den Strom durch die Sekundärseite und durch die LEDs wiedergibt. Nach der optionalen Tiefpass-Filterung durch das RC-Glied Rlp, Clp wird das Ist-Signal ILED_PRIM der Steuerschaltung zurückgeführt.

Vorteilhafterweise werden also bei der Auswerteschaltung 50 beide Halbwellen des Wechselstroms ausgewertet. Der Hauptvorteil ist es dabei, dass die LED-Strommessung nunmehr genauer ist und dass ein linearer Zusammenhang zwischen dem LED-Strom und dem zurückgeführten Parameter ILED_PRIM besteht. Die mit einem möglichen variablen Magnetisierungsstrom verbundene Unsicherheit betreffend die Messung entfällt somit bei der Auswerteschaltung 50.

Nachteilig ist es bei der Lösung mit dem Vollbrückengleichrichters 51, dass es in Bezug auf die verwendeten Bauelemente auch die teuerste Ausführungsform der in Figs. 3-5 dargestellten drei Auswerteschaltungen.

Beispielsweise kann der Erfassungs-Transformator ein Windungszahlen-Verhältnis von 1:60 aufweisen. Die in Figs. 3-5 eingesetzten Wiederstände Rb1, Rb2, Rb zur Auswertung des Wechselstroms weisen z.B. einen Wert von 60 Ohm auf. Zur Tiefpass-Filterung weisen der Widerstand Rlp und der Kondensator Clp z.B. einen jeweiligen Wert von 130 Ohm bzw. 220 nF auf.

Vorzugsweise wird der Steuerschaltung ST auf der Primärseite L2/1 kein weiteres Messsignal von der Primärseite des Resonanzkreises 3 zugeführt, insbesondere vorzugsweise kein Messsignal, das den Strom durch die Halbbrückenschaltung 2 wiedergibt. Insbesondere ist also kein Messwiderstand in Serie zur Primärwicklung L2a bzw. in Serie zum Resonanzkreis 3 geschaltet.

Zusätzlich oder alternativ zur Regelung des Stroms durch die LEDs können über die genannte Messung des Ist-Signals ILED_PRIM auch bestimmte Fehlerzustände erfasst werden. Insbesondere kann der Fehlerzustand "no load" ermittelt werden, wobei in diesem Fehlerzustand kein Strom auf der Sekundärseite L2/2 fliest. Z.B. kann dieser Fehlerzustand bedeuten, dass keine Last bzw. keine LEDs vorhanden sind oder dass die LEDs bzw. die LED-Strecke defekt sind.

Anhand des Ist-Signals ILED_PRIM kann somit die Steuerschaltung auch einen Fehlerzustand auf der Sekundärseite L2/2 des Transformators L2 und/oder einen Fehlerzustand der Leuchtmittel bzw. der LEDs erfassen. Davon abhängig kann die Steuerschaltung ST ein Fehler-Signal ausgeben und z.B. einer zentralen Überwachungseinheit (nicht gezeigt) weitergeben. Abhängig von solchen Fehlerzuständen kann die Steuerschaltung ST ebenfalls die Ansteuerung des Wechselrichters bzw. der Halbbrücke 2 verändern.

## Patentansprüche

1. Treiberschaltung (1, 20) für Leuchtmittel (LED), insbesondere LEDs, aufweisend:
- eine mit einer Spannung (Vdc) versorgbare und mittels wenigstens eines Schalters (FET1, FET2) getaktete Schaltung (2), wie bspw. einen Wechselrichter in Form einer Halbbrückenschaltung,
- einen Resonanzkreis (3), wobei die getaktete Schaltung (2) den Resonanzkreis (3) speist,
- einen auf den Resonanzkreis (3) folgenden Transformator (L2), ausgehend von dessen Sekundärwicklung (L2b) die Leuchtmittel (LED) versorgbar sind, und
- eine auf der Primärseite (L2/1) angeordnete Steuerschaltung (ST), die den wenigstens einen Schalter (FET1, FET2) der getakteten Schaltung (2) taktet,
wobei der Steuerschaltung (ST) ein Messwert (ILED_PRIM) für den Strom durch die Leuchtmittel zurückgeführt wird, und
wobei die Steuerschaltung (ST) dazu ausgebildet ist, zur Regelung des Stroms durch die Leuchtmittel den wenigstens einen Schalter (FET1, FET2) der getakteten Schaltung abhängig von dem Messwert (ILED_PRIM) zu takten,
**dadurch gekennzeichnet, dass**
die Treiberschaltung weiter aufweist:
- einen Erfassungs-Transformator (CTR1, CTR3; CTR1', CTR2', CTR3) mit mindestens einer auf der Sekundärseite (L2/2) des Transformators (L2) geschalteten Erfassungs-Wicklung (CTR1; CTR1', CTR2') zur induktiven Auskopplung eines Ist-Signals, wobei das Ist-Signal den Strom durch die Leuchtmittel (LED) indirekt wiedergibt, und
- eine Auswerteschaltung (30), die dazu ausgebildet ist, das induktiv ausgekoppelte Ist-Signal auszuwerten, das ausgewertete Ist-Signal als den Messwert (ILED _PRIM) für den Strom durch die Leuchtmittel (LED) zu erzeugen und an die Steuerschaltung (ST) zurückzuführen, wobei die Steuerschaltung (ST) dazu ausgebildet ist:
- anhand des Messwertes (ILED_PRIM) einen Fehlerzustand folgend der Sekundärwicklung (L2b) des Transformators (L2) und/oder der Leuchtmittel (LED) zu erfassen und davon abhängig ein Fehler-Signal auszugeben.

2. Treiberschaltung nach Anspruch 1,
wobei die Sekundärwicklung (L2b) des Transformators (L2) eine Gleichrichterschaltung (4, 24) speist und das Ist-Signal vor der Gleichrichtung ausgekoppelt ist.

3. Treiberschaltung nach Anspruch 2,
wobei die Gleichrichterschaltung als Vollbrückengleichrichter (4) oder Mittelpunktgleichrichter (24) ausgestaltet ist.

4. Treiberschaltung nach Anspruch 3,
wobei als die mindestens eine auf der Sekundärseite des Transformators (L2) geschaltete Erfassungs-Wicklung (CTR1; CTR1', CTR2') eine Erfassungs-Wicklung (CTR1) vorgesehen ist, wenn die Gleichrichterschaltung als Vollbrückengleichrichter (4) ausgestaltet ist, und zwei Erfassungs-Wicklungen (CTR1', CTR2') vorgesehen sind, wenn die Gleichrichterschaltung als Mittelpunktgleichrichter (24) ausgestaltet ist.

5. Treiberschaltung nach einem der vorstehenden
Ansprüche,
wobei die Auswerteschaltung (30, 40, 50) einen Gleichrichter aufweist.

6. Treiberschaltung nach einem der vorstehenden
Ansprüche,
wobei die Auswerteschaltung (30, 40, 50) derart ausgebildet ist, dass eine oder beide Polaritäten des induktiv ausgekoppelten Ist-Signals der Steuerschaltung (ST) zugeführt werden.

7. Treiberschaltung nach einem der vorhergehenden Ansprüche,
wobei die Steuerschaltung (ST) die Schalter (FET1, FET2) der getakteten Schaltung (2) ohne galvanische Trennung ansteuert.

8. Treiberschaltung nach einem der vorhergehenden Ansprüche,
wobei die Steuerschaltung (ST) ein ASIC oder ein Mikrokontroller ist.

9. Treiberschaltung nach einem der vorhergehenden Ansprüche,
wobei der Steuerschaltung (ST) kein Signal von der Primärseite (L2/1) des Transformators (L2), also der der getakteten Schaltung (2) zugewandten Seite des Transformators (L2), zurückgeführt ist.

10. LED-Modul,
aufweisend eine Treiberschaltung (1, 20) für Leuchtmittel (LED), insbesondere LEDs, nach einem der vorhergehenden Ansprüche sowie wenigstens eine von der Treiberschaltung (1, 20) versorgte LED-Strecke, die das Leuchtmittel (LED) aufweist.

11. Leuchte, insbesondere LED-Leuchte,
aufweisend eine Treiberschaltung (1, 20) nach einem der Ansprüche 1 bis 9 sowie einen vorgeschalteten Gleichrichter zum Gleichrichten einer Netzspannung und einen DC/DC-Wandler, z.B. in Form einer Leistungsfaktorkorrektur-Schaltung, zur Versorgung der Treiberschaltung (1, 20) ausgehend von der gleichgerichteten Netzspannung.

12. Verfahren zu Regelung des Stroms durch Leuchtmittel (LED), insbesondere LEDs, unter Verwendung einer Treiberschaltung (1, 20) nach Anspruch 1, wobei das Verfahren aufweist:
- Versorgen der getakteten Schaltung (2) mit der Spannung (Vdc),
- Speisen des Resonanzkreises (3) mittels der getakteten Schaltung (2),
- Versorgen der Leuchtmittel (LED) ausgehend von der Sekundärwicklung (L2b) des Transformators (L2),
- induktives Auskoppeln des Ist-Signals mittels des Erfassungs-Transformators (CTR1, CTR3; CTR1', CTR2', CTR3) mit der mindestens einen auf der Sekundärseite (L2/2) des Transformators (L2) geschalteten Erfassungs-Wicklung (CTR1; CTR1', CTR2'), wobei das Ist-Signal den Strom durch die Leuchtmittel (LED) indirekt wiedergibt,
- Erzeugen des Messwerts (ILED_PRIM) für den Strom durch die Leuchtmittel (LED) durch Auswerten des induktiv ausgekoppelten Ist-Signals mittels der Auswerteschaltung (30),
- Zurückführen des Messwerts (ILED_PRIM) an die Steuerschaltung (ST),
- Takten des wenigstens einen Schalters (FET1, FET2) der getakteten Schaltung (2) in Abhängigkeit von dem Messwert (ILED_PRIM) mittels der Steuerschaltung (ST) zur Regelung des Stroms durch die Leuchtmittel (LED),
- Erfassen des Fehlerzustands folgend der Sekundärwicklung (L2b) des Transformators (L2) und/oder der Leuchtmittel (LED) anhand des Messwerts (ILED_PRIM) mittels der Steuerschaltung (ST),
- Ausgeben des Fehler-Signals in Abhängigkeit von dem erfassten Fehlerzustand mittels der Steuerschaltung (ST).

## Claims

1. Driver circuit (1, 20) for illuminants (LED), especially LEDs, comprising:
- a circuit (2), such as an inverter in the form of a half-bridge circuit, which can be supplied with a voltage (Vdc) and is clocked by means of at least one switch (FET1, FET2),
- a resonant circuit (3), wherein the clocked circuit (2) feeds the resonant circuit (3),
- a transformer (L2) which follows the resonant circuit (3) and starting from the secondary winding (L2b) of which the illuminants (LED) can be supplied, and
- a control circuit (ST) which is arranged on the primary side (L2/1) and clocks the at least one switch (FET1, FET2) of the clocked circuit (2),
wherein a measured value (ILED_PRIM) for the current is returned through the illuminants to the control circuit (ST), and
wherein the control circuit (ST) is designed to clock the at least one switch (FET1, FET2) of the clocked circuit as a function of the measured value (ILED_PRIM) in order to regulate the current through the illuminants,
**characterized in that**
the driver circuit furthermore comprises:
- a detection transformer (CTR1, CTR3; CTR1', CTR2', CTR3) having at least one detection winding (CTR1; CTR1', CTR2') connected on the secondary side (L2/2) of the transformer (L2) for inductively coupling an actual signal, wherein the actual signal indirectly represents the current through the illuminants (LED), and
- an evaluation circuit (30) which is designed to evaluate the inductively decoupled actual signal, to generate the evaluated actual signal as the measured value (ILED_PRIM) for the current through the illuminants (LED), and to return it to the control circuit (ST), wherein the control circuit (ST) is designed:
- to detect, on the basis of the measured value (ILED_PRIM), an error state following the secondary winding (L2b) of the transformer (L2) and/or of the illuminants (LED) and to output an error signal as a function thereof.

2. Driver circuit according to Claim 1,
wherein the secondary winding (L2b) of the transformer (L2) feeds a rectifier circuit (4, 24) and the actual signal is decoupled prior to the rectification.

3. Driver circuit according to Claim 2,
wherein the rectifier circuit is designed as a full-bridge rectifier (4) or midpoint rectifier (24).

4. Driver circuit according to Claim 3,
wherein a detection winding (CTR1) is provided as the at least one detection winding (CTR1; CTR1', CTR2') connected on the secondary side of the transformer (L2) if the rectifier circuit is designed as a full-bridge rectifier (4), and two detection windings (CTR1', CTR2') are provided if the rectifier circuit is designed as a midpoint rectifier (24).

5. Driver circuit according to any one of the preceding claims,
wherein the evaluation circuit (30, 40, 50) has a rectifier.

6. Driver circuit according to any one of the preceding claims,
wherein the evaluation circuit (30, 40, 50) is designed in such a way that one or both polarities of the inductively decoupled actual signal are supplied to the control circuit (ST).

7. Driver circuit according to any one of the preceding claims,
wherein the control circuit (ST) controls the switches (FET1, FET2) of the clocked circuit (2) without galvanic separation.

8. Driver circuit according to any one of the preceding claims,
wherein the control circuit (ST) is an ASIC or a microcontroller.

9. Driver circuit according to any one of the preceding claims,
wherein no signal from the primary side (L2/1) of the transformer (L2), that is to say the side of the transformer (L2) toward the clocked circuit (2), is returned to the control circuit (ST).

10. LED module,
comprising a driver circuit (1, 20) for illuminants (LED), in particular LEDs, according to any one of the preceding claims, and at least one LED path provided by the driver circuit (1, 20) and having the illuminant (LED).

11. Light, in particular LED light,
comprising a driver circuit (1, 20) according to any one of Claims 1 to 9 and an upstream rectifier for rectifying a mains voltage and a DC/DC converter, e.g., in the form of a power factor correction circuit, for supplying the driver circuit (1, 20) starting from the rectified mains voltage.

12. Method for regulating the current through illuminants (LED), in particular LEDs, using a driver circuit (1, 20) according to Claim 1, wherein the method comprises:
- supplying the clocked circuit (2) with the voltage (Vdc),
- feeding the resonant circuit (3) by means of the clocked circuit (2),
- supplying the illuminants (LED) starting from the secondary winding (L2b) of the transformer (L2),
- inductively decoupling the actual signal by means of the detection transformer (CTR1, CTR3; CTR1', CTR2', CTR3) having the at least one detection winding (CTR1; CTR1', CTR2') connected on the secondary side (L2/2) of the transformer (L2), wherein the actual signal indirectly represents the current through the illuminants (LED),
- generating the measured value (ILED_PRIM) for the current through the illuminants (LED) by evaluating the inductively decoupled actual signal by means of the evaluation circuit (30),
- returning the measured value (ILED_PRIM) to the control circuit (ST),
- clocking the at least one switch (FET1, FET2) of the clocked circuit (2) as a function of the measured value (ILED_PRIM) by means of the control circuit (ST) to regulate the current through the illuminants (LED),
- detecting the error state following the secondary winding (L2b) of the transformer (L2) and/or of the illuminants (LED) on the basis of the measured value (ILED_PRIM) by means of the control circuit (ST),
- outputting the error signal as a function of the detected error state by means of the control circuit (ST).

## Revendications

1. Circuit d'excitation (1, 20) pour moyens d'éclairage (LED), en particulier diodes électroluminescentes, comprenant :
- un circuit (2) pouvant être alimenté en tension (Vdc) et cadencé au moyen d'au moins un commutateur (FET1, FET2), tel que par exemple un onduleur sous la forme d'un circuit en demi-pont,
- un circuit de résonance (3), dans lequel le circuit (2) cadencé alimente le circuit de résonance (3),
- un transformateur (L2) en aval du circuit de résonance (3), à partir d'un enroulement secondaire (L2b) duquel les moyens d'éclairage (LED) peuvent être alimentés, et
- un circuit de commande (ST) disposé sur le côté primaire (L2/1), lequel cadence l'au moins un commutateur (FET1, FET2) du circuit (2) cadencé,
dans lequel au circuit de commande (ST), une valeur de mesure (ILED_PRIM) du courant à travers les moyens d'éclairage est retournée, et
dans lequel le circuit de commande (ST) est conçu, pour réguler le courant à travers les moyens d'éclairage, pour cadencer l'au moins un commutateur (FET1, FET2) du circuit cadencé en fonction de la valeur de mesure (ILED_PRIM),
**caractérisé en ce que**
ledit circuit d'excitation comprend en outre :
- un transformateur de détection (CTR1, CTR3 ; CTR1', CTR2', CTR3) comportant au moins un enroulement de détection (CTR1 ; CTR1', CTR2') connecté au côté secondaire (L2/2) du transformateur (L2) pour découpler de manière inductive un signal réel, dans lequel le signal réel reproduit indirectement le courant à travers les moyens d'éclairage (LED), et
- un circuit d'évaluation (30), lequel est conçu pour évaluer le signal réel découplé de manière inductive, pour générer le signal réel évalué en tant que valeur de mesure (ILED_PRIM) pour le courant à travers les moyens d'éclairage (LED) et pour le retourner au circuit de commande (ST), dans lequel le circuit de commande (ST) est conçu :
- pour détecter à l'aide de la valeur de mesure (ILED_PRIM) un état de défaut suivant l'enroulement secondaire (L2b) du transformateur (L2) et/ou les moyens d'éclairage (LED) et pour émettre en fonction de celui-ci un signal de défaut.

2. Circuit d'excitation selon la revendication 1,
dans lequel l'enroulement secondaire (L2b) du transformateur (L2) alimente un circuit redresseur (4, 24) et le signal réel est découplé avant le redressement.

3. Circuit d'excitation selon la revendication 2,
dans lequel le circuit redresseur est conçu sous la forme d'un redresseur à pont complet (4) ou d'un redresseur de point central (24).

4. Circuit d'excitation selon la revendication 3,
dans lequel, en tant que l'au moins un enroulement de détection (CTR1 ; CTR1', CTR2') connecté sur le côté secondaire du transformateur (L2), un enroulement de détection (CTR1) est situé lorsque le circuit redresseur est conçu sous la forme d'un redresseur à pont complet (4), et deux enroulements de détection (CTR1', CTR2') sont situés lorsque le circuit redresseur est conçu sous la forme d'un redresseur de point central (24).

5. Circuit d'excitation selon l'une quelconque des revendications précédentes, dans lequel le circuit d'évaluation (30, 40, 50) comporte un redresseur.

6. Circuit d'excitation selon l'une quelconque des revendications précédentes,
dans lequel le circuit d'évaluation (30, 40, 50) est conçu de telle sorte qu'une ou les deux polarités du signal réel découplé de manière inductive peuvent être amenées au circuit de commande (ST).

7. Circuit d'excitation selon l'une quelconque des revendications précédentes,
dans lequel le circuit de commande (ST) commande les commutateurs (FET1, FET2) du circuit (2) cadencé sans séparation galvanique.

8. Circuit d'excitation selon l'une quelconque des revendications précédentes, dans lequel le circuit de commande (ST) est un ASIC ou un microcontrôleur.

9. Circuit d'excitation selon l'une quelconque des revendications précédentes,
dans lequel au circuit de commande (ST), aucun signal n'est retourné du côté primaire (L2/1) du transformateur (L2), donc du côté du transformateur (L2) faisant face au circuit (2) cadencé.

10. Module de LED,
comprenant un circuit d'excitation (1, 20) pour moyens d'éclairage (LED), en particulier diodes électroluminescentes selon l'une quelconque des revendications précédentes ainsi qu'au moins un tronçon à LED alimenté par le circuit d'excitation (1, 20), lequel comporte le moyen d'éclairage (LED).

11. Lampe, en particulier lampe à LED,
comprenant un circuit d'excitation (1, 20) selon l'une quelconque des revendications 1 à 9 ainsi qu'un redresseur connecté en amont pour le redressement d'une tension de secteur et un convertisseur CC/CC, p. ex. sous la forme d'un circuit de correction du facteur de puissance, pour alimenter le circuit d'excitation (1, 20) à partir de la tension de secteur redressée.

12. Procédé de régulation du courant à travers des moyens d'éclairage (LED) en particulier des LED, à l'aide d'un circuit d'excitation (1, 20) selon la revendication 1, ledit procédé comprenant :
- l'alimentation du circuit (2) cadencé en tension (Vdc),
- l'alimentation du circuit de résonance (3) au moyen du circuit (2) cadencé,
- l'alimentation des moyens d'éclairage (LED) à partir de l'enroulement secondaire (L2b) du transformateur (L2),
- le découplage inductif du signal réel au moyen du transformateur de détection (CTR1, CTR3 ; CTR1', CTR2', CTR3) comportant l'au moins un enroulement de détection (CTR1 ; CTR1', CTR2') connecté au côté secondaire (L2/2) du transformateur (L2), dans lequel le signal réel reproduise indirectement le courant à travers les moyens d'éclairage (LED),
- la génération d'une valeur de mesure (ILED_PRIM) pour le courant à travers les moyens d'éclairage (LED) par évaluation du signal réel découplé de manière inductive au moyen du circuit d'évaluation (30),
- le retour de la valeur de mesure (ILED_PRIM) au circuit de commande (ST),
- le cadençage de l'au moins un commutateur (FET1, FET2) du circuit (2) cadencé en fonction de la valeur de mesure (ILED_PRIM) au moyen du circuit de commande (ST) pour la régulation du courant à travers les moyens d'éclairage (LED),
- la détection de l'état de défaut suivant l'enroulement secondaire (L2b) du transformateur (L2) et/ou les moyens d'éclairage (LED) à l'aide de la valeur de mesure (ILED_PRIM) au moyen du circuit de commande (ST),
- l'émission du signal de défaut en fonction de l'état de défaut détecté au moyen du circuit de commande (ST).
